# EUROPEAN PATENT APPLICATION

(11) **EP 2 275 928 A1**
(43) Date of publication of application: **19.01.2011**
(21) Application number: 09180140.7
(22) Date of filing: 21.12.2009
(51) Int. Cl.: G06F 9/44

(54) **Method for generating widget icon, client device, and widget engine**

(30) Priority: 01.07.2009 CN 200910108610
(71) Applicant: Huawei Technologies Co., Ltd., Longgang District, Shenzhen Guangdong 518129 (CN)
(72) Inventor: Qiu, Zhihong, Shenzhen,Guangdong 518129 (CN); Fu, Haifang, Shenzhen Guangdong 518129 (CN); Jin, Hongbo, Shenzhen Guangdong 518129 (CN); Zhang, Jie, Shenzhen Guangdong 518129 (CN)
(74) Representative: Barth, Stephan Manuel

(57) **Abstract**

A method for generating a widget icon is disclosed. The method includes: obtaining a widget summary information file; parsing the widget summary information file, and executing the parsed widget summary information file; and generating a widget icon according to the executed widget summary information file. A method for generating a widget summary information file and a widget engine are also provided, thus reducing the occupancy of system resources.

## Description

### Field of the Invention

The present invention relates to the computer field, and in particular, to a method for generating a widget icon, a client device, and a widget engine.

### Background of the Invention

With the rapid development of the mobile Internet, the widget further promotes the development of the Internet. The widget is a JavaScript-based application platform. It is also a network-based small utility that can run on the desktop independently. The widget is generally encapsulated into a file for the client to download and install. A user may use the widget to enjoy services such as browsing news, weather information and pictures.

Because each widget corresponds to an icon, the user must click the widget icon to view the contents in the widget. If any contents in the downloaded widgets are updated, the user needs to click each widget icon to view the updated contents, which causes frequent operations of the user and reduces the interest of the user.

A floating widget technology can be configured to display the information about the updated widget contents on the widget manager panel, so that the user can know the content update details of the widget without the access to the details page of the widget, thus reducing frequent operations.

During the implementation of the present invention, the inventor finds at least following problems in the prior art: The floating widget technology in the prior art needs to occupy a large number of resources. Each widget needs to reserve some threads in the system to respond to the user operations and update the information. Taking a mobile terminal as an example, because the mobile terminal has only a few of threads that can be allocated, the thread resources of the mobile terminal may be occupied if the prior art is used, thus decreasing the use efficiency of the mobile terminal.

### Summary of the Invention

Embodiments of the present invention provide a method for generating a widget icon, a method for generating a widget summary information file, and a widget engine, to reduce system resources occupied during the running of the widget.

A method for generating a widget icon in an embodiment of the present invention includes:
obtaining a widget summary information file;
parsing the widget summary information file, and generating a document object model, DOM, tree; and
generating a widget icon according to the DOM tree.

A method for generating a widget summary information file in an embodiment of the present invention includes:
simulating running of a widget to generate a DOM tree;
obtaining codes of important information in the DOM tree, where the codes of the important information include codes for generating local information of a client and codes for obtaining information from a server; and
generating the widget summary information file by using the codes.

A widget engine for generating a widget icon in an embodiment of the present invention includes a managing unit and a parsing unit.

The managing unit further includes:
a loading subunit, configured to: obtain a widget summary information file, and invoke the parsing unit to parse the widget summary information file and execute the parsed widget summary information file; and
an updating subunit, configured to generate a widget icon according to the executed widget summary information file.

In the technical solution of the present invention, the codes of the important information in the DOM tree are obtained to generate the widget summary information file, which eliminates the codes for interactions with the user and reduces the number of threads for executing the interactions with the user during the running of the widget, thus reducing the occupancy of system resources.

### Brief Description of the Drawings

To make the technical solution under the present invention or in the prior art clearer, the accompanying drawings for illustrating the embodiments of the present invention or illustrating the prior art are outlined below. Evidently, the accompanying drawings are exemplary only, and those skilled in the art can derive other drawings from such accompanying drawings without creative work.
FIG. 1 is a flowchart of a method for generating a widget summary information file in an embodiment of the present invention;
FIG. 2 is a flowchart of a method for generating a widget icon in an embodiment of the present invention;
FIG. 3A shows an architecture diagram of an apparatus for generating a widget summary information file in an embodiment of the present invention;
FIG. 3B shows an architecture diagram of an apparatus for generating a widget summary information file in another embodiment of the present invention;
FIG. 4 shows an architecture diagram of a widget engine in an embodiment of the present invention; and
FIG. 5 shows an architecture diagram of a client device in an embodiment of the present invention.

### Detailed Description of the Invention

The technical solution of the present invention is hereinafter described in detail with reference to the accompanying drawings. It is evident that the embodiments are only exemplary and the present invention is not limited to such embodiments. Other embodiments that those skilled in the art derive without creative work based on embodiments of the present invention also fall in the scope of protection of the present invention.

In embodiments of the present invention, the widget is regarded as a Web page running in the widget engine. The widget is developed by an asynchronous JavaScript and XML, Ajax, technology, in which the page contents are represented by the hypertext markup language, HTML, technology; the page presentation form is represented by the cascading style sheet, CSS, technology; and the program logic of the page is represented by the JavaScript technology. Generally, the widget includes an HTML file, a CSS file, a JavaScript file, a configuration file, a signature file, and a picture resource file. These files may be encapsulated into a specific type of widget package on the server (for example, package in the wgt format) for the user to download. It should be noted that the HTML file, the CSS file, and the JavaScript file are collectively known as HTML files. The configuration file adopts the extensible markup language, XML format, and is configured to describe the configuration information. The signature file adopts the XML format, and is used for digital signature. The picture resource file includes an icon file and a thumbnail file, where the icon file may adopt formats such as png, gif, ico, or svg, and is used as a default icon; the thumbnail file may adopt formats such as png, gif, ico, or svg, and is used as a small icon.

In embodiments of the present invention, a widget summary information file is added to the original widget. That is, a summary information file that includes the contents of the widget is added. The widget summary information file in embodiments of the present invention is different from the traditional summary information file. Specifically, the widget summary information file is not an independent text file, but an Ajax file. The widget summary information file includes JavaScript codes that can be executed to obtain dynamic information from the server to update the contents. The following describes how to generate this widget summary information file and how to generate a widget icon by using this widget summary information file.

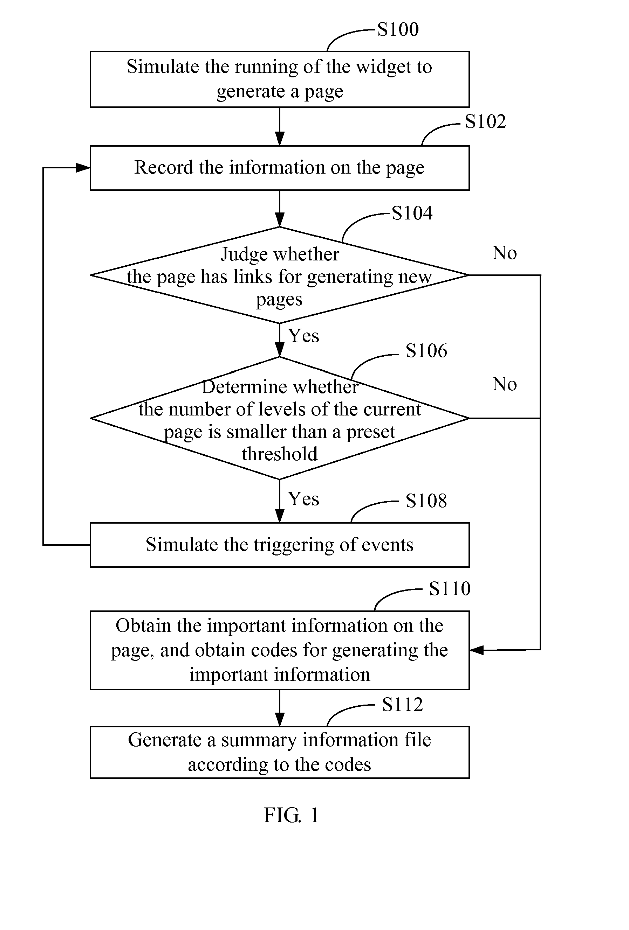

FIG. 1 is a flowchart of a method for generating a widget summary information file in an embodiment of the present invention. The method includes: simulating the running of the widget to generate a DOM tree; obtaining the codes of important information in the DOM tree, where the codes of the important information include codes for generating the local information of the client and codes for obtaining information from the server; and generating the widget summary information file by using the codes. Details are given below. In this embodiment, a widget summary information file is generated for each widget.

Block S100: Simulate the running of the widget to generate a page. In this embodiment, the process of simulating the running of the widget is a process of simulating the running of a details page of the widget. The details page of a widget is a page generated when the widget runs. In this embodiment, to run the widget is to run the HTML file, JavaScript file and CSS file. In this embodiment, because the widget is developed based on the Ajax technology, a DOM tree may be generated in the program after the widget runs. The DOM tree is a semi-structured representation form of the Ajax file in the computer. The DOM tree includes JavaScript codes that can operate the DOM tree to generate a new DOM tree. Each code has an execution level. That is, the DOM tree is divided into levels.

In this embodiment, the details page of the widget may include the following three types of codes: (1) codes that can be executed without interactions with the user, for example, codes triggered by an onload event; (2) codes that can be executed only through interactions with the user, for example, codes triggered by an onclick event; (3) codes that can be executed only when the user enters parameters such as user name and password.

For example, when a Web page appears, the page may include multiple links, which are similar to the codes for generating a new DOM tree in the DOM tree. Then, the execution levels of the codes correspond to the number of levels of the current page. The user may click one of these links to go to a new page. In addition, these pages are divided by levels. For example, the first page is the first level, and the rest is continued in the same way until the page that the user wants to view. Certainly, it is understandable that the number of levels of the page corresponds to the number of levels of the DOM tree or the number of execution levels of the codes. It is understandable that the DOM tree is the page content that can be viewed by the user and that each DOM tree is associated with the page viewed by the user. After a widget runs, the page displayed to the user may include much information, such as links for generating new pages, icon information, data information, and the number of levels of the page. In this embodiment, there may be one or multiple links for generating new pages.

Block S102: Record the information on the page. In this embodiment, the link information, icon information, data information, and the number of levels of the new page generated may be recorded in block S100. Alternatively, the data of the DOM tree generated in block S100 may be recorded, including codes and execution levels of the codes.

Block S104: Determine whether the page has links for generating new pages. In this embodiment, this Block S104 may determine whether the DOM tree includes codes for generating a new DOM tree. In this embodiment, if the page has links for generating new pages or codes for generating a new DOM tree, the process goes to block S106. In this embodiment, the page with specific information is not completely open or found. If the page has no links for generating new pages or codes for generating a new DOM tree, the process goes to block S110. In this embodiment, a page may generate one or multiple new pages.

Block S106: Determine whether the number of levels of the current page is smaller than the preset threshold. In this embodiment, this block S106 may determine whether the number of execution levels of the codes for generating a new DOM tree is smaller than a preset threshold.

In this embodiment, if the number of levels of the current page is smaller than the preset threshold or the number of execution levels of the codes for generating the new DOM tree is smaller than the preset threshold, the process goes to block S108. If the number of levels of the current page is not smaller than the preset threshold or the number of execution levels of the codes for generating the new DOM tree is not smaller than the preset threshold, the process goes to block S110.

Block S108: Simulate the triggering of events. In this embodiment, new pages or DOM trees are generated by simulating the events. In this embodiment, new DOM trees are generated by simulating the execution of JavaScript codes. For example, if the clicking of a link on the page is simulated, a new page appears. Table 1 lists specific events, which can be triggered through simulation.

| Type | Event | Description |
|---|---|---|
| | onclick | This event is triggered upon a click. |
| | ondblclick | This event is triggered upon a double click. |
| | onmousedown | This event is triggered when the user clicks the mouse button. |
| | onmouseup | This event is triggered when the user clicks and then releases the mouse button. |
| | onmouseover | This event is triggered when the user moves the mouse pointer over an object. |
| General event | onmousemove | This event is triggered when the user moves the mouse pointer. |
| | onmouseout | This event is triggered when the user moves the mouse pointer away from an object. |
| | onkeypress | This event is triggered when the user presses and then releases a key on the keyboard. |
| | onkeydown | This event is triggered when the user presses a key on the keyboard. |
| | onkeyup | This event is triggered when the user releases a key on the keyboard. |
| Page related event | onabort | The downloading of a picture is interrupted by the user. |
| | onbeforeunload | This event is triggered when the contents on the current page are changed. |
| | onerror | This event is triggered in the case of errors. |
| | onload | This event is triggered when the page contents are complete. |
| | onmove | This event is triggered when the window of the browser is moved. |
| | onresize | This event is triggered when the window size of the browser is changed. |
| | onscroll | This event is triggered when the location of the scroll bar is changed. |
| | onstop | This event is triggered when the stop button of the browser is pressed or the downloading of a file is interrupted. |
| | onunload | This event is triggered when the current page is changed. |
| | onblur | This event is triggered when a current element looses the focus. |
| | onchange | This event is triggered when a current element looses the focus and the element content is changed. |
| Form related event | onfocus | This event is triggered when an element obtains the focus. |
| | onreset | This event is triggered when the attribute of the RESET button in the form is activated. |
| | onsubmit | This event is triggered when a form is submitted. |
| | onbounce | This event is triggered when the content in the Marquee is moved outside the display scope of the Marquee. |
| Rolling caption event | onfinish | This event is triggered when the Marquee element displays all the contents to be displayed. |
| | onstart | This event is triggered when the Marquee element begins to display the contents. |
| Editing event | onbeforecopy | This event is triggered before the selected contents on the current page are copied to the clipboard of the browser. |
| | onbeforecut | This event is triggered when part or all the contents on the page are moved away from the current page [clipboard] to the clipboard of the browser. |
| | onbefbreeditfocus | The current element will be in the editing state. |
| | onbefolrepaste | This event is triggered when the contents are pasted from the clipboard of the browser to the page. |
| | onbeforeupdate | The object is notified when the user pastes the contents in the clipboard. |
| | oncontextmenu | This event is triggered when the user right-clicks the mouse button to display a menu or presses a key on the keyboard to trigger the page menu. |
| | oncopy | This event is triggered when the current selected contents on the page are copied. |
| | oncut | This event is triggered when the current selected contents on the page are cut. |
| | ondrag | This event (movement event) is triggered when an object is dragged. |
| | ondragdrop | An external object is dragged into a window or frame. |
| | ondragend | This event is triggered when the user stops dragging the mouse, that is, when the user releases the mouse button. |
| | ondragenter | This event is triggered when the browser drags an object into the container of the object. |
| | ondragleave | This event is triggered when the user drags an object out of the container of the object. |
| | ondragover | This event is triggered when a dragged object is in the container of another object. |
| | ondragstart | This event is triggered when an object is dragged. |
| | ondrop | This event is triggered when the user releases the mouse button in a dragging process. |
| | onlosecapture | This event is triggered when an element looses the selection focus formed when the user moves the mouse pointer. |
| | onpaste | This event is triggered when the contents are pasted. |
| | onselect | This event is triggered when text contents are selected. |
| | onselectstart | This event is triggered when the text contents are to be selected. |
| | onafterupdate | This event is triggered when the data is transferred from the data source to the object. |
| | oncellchange | This event is triggered when the data source is changed. |
| | ondataavailable | This event is triggered when the data is received completely. |
| | ondatasetchanged | This event is triggered when the data is changed at the data source. |
| | ondatasetcomplete | This event is triggered when all the valid data from the data source is read completely. |
| Data binding event | onerrorupdate | The onAfterUpdate event is replaced when the onBeforeUpdate event is configured to trigger the cancellation of data transmission. |
| | onrowenter | This event is triggered when the data of the current data source is changed and new valid data is available. |
| | onrowexit | This event is triggered when the data of the current data source is to be changed. |
| | onrowsdelete | This event is triggered when the current data record is to be deleted. |
| | onrowsinserted | This event is triggered when new data records are to be inserted in the current data source. |
| External event | onafterprint | This event is triggered when the file is printed. |
| | onbeforeprint | This event is triggered when the file is to be printed. |
| | onfilterchange | This event is triggered when the filter effect of an object is changed. |
| | onhelp | This event is triggered when the user presses F1 or selects the help of the browser. |
| | onpropertychange | This event is triggered when one of the object attributes is changed. |
| | onreadystatechan ge | This event is triggered when the initial attribute value of the object is changed. |

In this embodiment, after block S108 is executed, the process goes back to block S100.

In this embodiment, when the triggering of events is simulated on the page with links for generating new pages, a simulated new page may be generated if a link for generating new pages exists in block S104; multiple simulated new pages may be generated when multiple links for generating new pages exist in block S104.

Then, block S104 and block S106 are executed. If a simulated new page is generated, judgment is made on this page according to block S104 and block S106. If multiple simulated new pages are generated, judgment is made on each page according to block S104 and block S106. For the new pages that meet the judgment condition, block S110 or block S108 is executed.

Block S110: Obtain the important information on the page, and obtain codes for generating the important information. In this embodiment, if multiple new pages meet the judgment condition in block S104 or block S106, the important information on multiple new pages must be obtained in block S110. In the following description, it is supposed that only one new page is available.

In this embodiment, the important information on the page needs to be identified and obtained by using the technology for identifying the important information in the prior art; or the important information in the DOM tree is analyzed; and the codes for generating the important information are analyzed. In this embodiment, the important information may include local information of the client and the information obtained from the server. In this embodiment, if a page displayed after a widget is executed has icon information and setting information, for example, a weather widget of YAHOO, the icon information is YAHOO in the widget. If the user wants to know the weather at a certain point of time in Shenzhen, the user needs to click the location information and time information. The location information and date information are saved in the setting information and do not need to be obtained from the server. After the widget is executed, the location information that needs to be obtained from the server is "Shenzhen", and the date information adopts the year-month-day format. That is, the weather information is the information that needs to be obtained from the server.

The codes for generating the important information may include direct codes and indirect codes for generating the important information. The direct codes may be a code B for obtaining information from the server and generating the local information of the client. The indirect codes may be a code C based on which a code A is generated, and a code D based on which the code B is generated, when the information is obtained from the server and the local information of the client is generated. The direct codes may be generated through the indirect codes. That is, the direct codes may be generated by using the previously executed codes, which may be known as the codes in the code path for generating the important information. Certainly, the codes for generating the important information include codes for generating the local information of the client and codes for obtaining the information from the server.

In this embodiment, the codes for generating the local information of the client and the codes for obtaining the information from the server may be the codes that can be executed without interactions with the user. Some codes that can be implemented only when the user enters parameters may be included in the codes for generating the important information depending on the previously executed codes. The codes that can be implemented only through interactions with the user, however, are removed.

It should be noted that block S104 may be executed before or after block S106.

In this embodiment, the codes for generating the important information obtained in block S110 should include codes for generating the important information of multiple new pages.

Block S112: Generate a summary information file according to the codes of the important information. In this embodiment, the codes for generating the local information of the client, codes for obtaining information from the server, and previously executed codes based on which the important information is generated are configured to generate a widget summary information file. The widget file may adopt the HTML format. The widget summary information file may exist in the forms of HTML file, JavaScript file and CSS file. Different from the details page of the widget in block S100, the widget summary information file excludes the codes that are not associated with the important information on the details page of the widget; that is, it reserves the codes that can be executed without interactions with the user, codes that can be implemented only through interactions with the user and codes that can be implemented only when the user enters parameters.

In the method for generating a widget summary information file in this embodiment, the running of the details page of the widget is simulated to obtain related important information and codes associated with the important information, and by using these codes, widget summary information files are generated. These widget summary information files are generated without interactions between the widget and the user, and are directly obtained from the server through the codes, thus reducing the number of interactions between the user and the widget.

In this embodiment, the widget summary information files may be generated by the developer through a terminal device. These widget summary information files may be stored in a storage medium or encapsulated into a file with the original widget; the file is uploaded to the server for the user to download and install. That is, the user downloads the original widget, and then generates a widget summary information file on the client by using the preceding method. Finally, the widget summary information file is invoked by the running widget. Certainly, the user may download the original widget, and then obtain the widget summary information file from the storage medium where the widget summary information file is stored. Finally, the widget summary information file is invoked by the running widget.

The following describes how to invoke or obtain a widget summary information file to generate a widget icon when the widget runs.

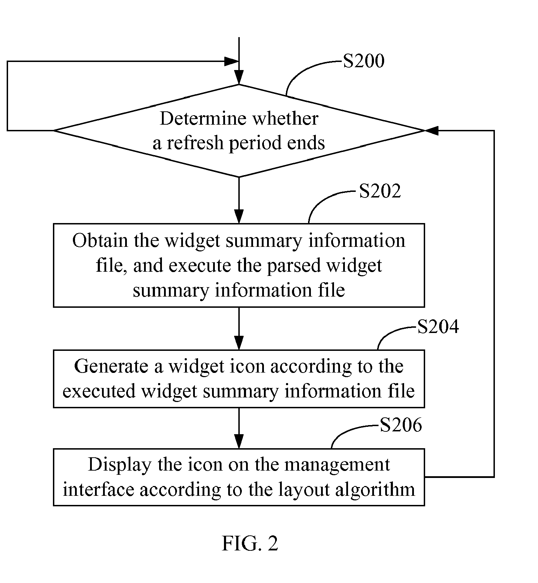

FIG. 2 is a flowchart of a method for generating a widget icon in an embodiment of the present invention.

In this embodiment, when the widget runs, the widget needs to re-invoke the widget summary information file periodically to update the widget icon, making it convenient for the user to know the to-be-updated contents of the running widget. In this embodiment, it is understandable that the widget needs to re-obtain the widget summary information file periodically to update the widget icon.

Block S200: Determine whether a refresh period ends. In this embodiment, this block S200 may determine whether the period of re-obtaining the widget summary information file ends or whether the period of updating the widget icon ends. In this embodiment, the widget icon needs to be updated each time when the widget summary information file is invoked and executed. Thus, the widget icon is associated with the widget summary information file.

In this embodiment, when the refresh period ends, block S202 is executed; when the refresh period does not end, block S200 is continued.

Block S202: Obtain the widget summary information file, and execute the parsed widget summary information file. In this embodiment, after the widget summary information file is obtained, the widget summary information file is parsed, and the parsed widget summary information file is executed. In this embodiment, the widget summary information file is parsed to obtain the codes included in the widget summary information file; according to the codes in the widget summary information file, the information corresponding to these codes is obtained from the server, and the local information of the client is generated. In this embodiment, the local information of the client is generated according to the codes for generating the local information of the client, and the information is obtained from the server according to the codes for obtaining the information from the server.

In addition, the format of the widget summary information file that includes the information obtained from the server and the local information of the client is converted into a DOM tree format. It is understandable that the DOM tree executes the parsed widget summary information file. In this embodiment, the codes associated with the important information in the widget summary information file are executed to obtain the important information from the server.

Block S204: Generate a widget icon according to the executed widget summary information file. In this embodiment, the DOM tree may be rendered by using the rendering technology in the prior art to generate a page, and to convert the page into an icon.

Block S206: Display the icon on the management interface according to the interface layout algorithm.

In the method for generating a widget icon in this embodiment of the present invention, a generated widget summary information file is obtained; the widget summary information file is executed to generate a widget icon. After the widget summary information file is obtained and executed, some threads may be invoked to obtain information from the server; after this operation is completed, these threads are released. Because the widget summary information file generated in this embodiment does not include codes for interactions with the user, these threads may not be invoked to execute these codes and may not be reserved to execute interactions with the user. Thus, the thread resources of the system are not occupied. In addition, the widget icon is generated by using the widget summary information file; the codes for interactions with the user are removed in the process of generating a widget summary information file. Thus, the process of generating a widget icon is optimized.

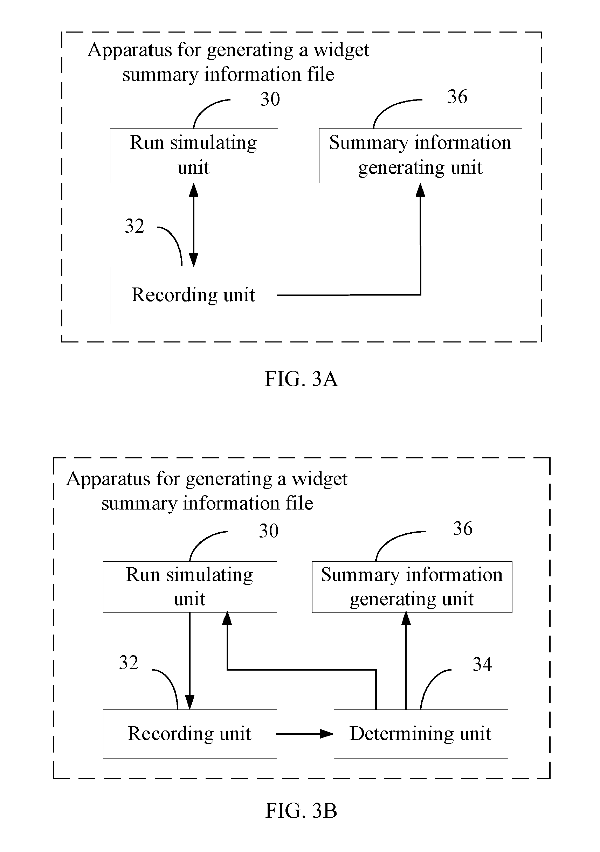

FIG. 3A shows an architecture diagram of an apparatus for generating a widget summary information file in an embodiment of the present invention.

In this embodiment, the widget summary information files may be generated by the developer through a terminal device. These widget summary information files may be stored in a storage medium or encapsulated into a file with the original widget; the file is uploaded to the server for the user to download and install. That is, the user downloads the original widget, and then generates a widget summary information file on the client by using the preceding method. Finally, the widget summary information file is invoked or obtained by the running widget. Certainly, the user may download the original widget, and then obtain the widget summary information file from the storage medium where the widget summary information file is stored. Finally, the widget summary information file is invoked by the running widget. That is, the apparatus for generating a widget summary information file may be an independent device or be configured in the client.

In this embodiment, the apparatus for generating a widget summary information file includes a run simulating unit 30, a recording unit 32, a determining unit 34, and a summary information generating unit 36.

In this embodiment, the run simulating unit 30 is configured to simulate the running of the widget to generate a page. In this embodiment, the process of simulating the running of the widget is a process of simulating the running of the details page of the widget. The details page of the widget is a page generated when a widget runs. In this embodiment, to run the widget is to run the HTML file, JavaScript file and CSS file. In this embodiment, because the widget is developed based on the Ajax technology, a DOM tree may be generated after the widget runs. The DOM tree is a semi-structured representation form of the Ajax file in the computer. The DOM tree includes JavaScript codes that can operate the DOM tree to generate a new DOM tree. Each code has an execution level. That is, the DOM tree is divided into levels.

In this embodiment, the details page of the widget may include the following three types of codes: (1) codes that can be executed without interactions with the user, for example, codes triggered by an onload event; (2) codes that can be executed only through interactions with the user, for example, codes triggered by an onclick event; (3) codes that can be executed only when the user enters parameters such as user name and password.

For example, when a Web page appears, the page may include multiple links, which are similar to the codes for generating a new DOM tree in the DOM tree. Then, the number of execution levels of the codes corresponds to the number of levels of the current page. The user may click one of these links to go to a new page. In addition, these pages are divided by levels. For example, the first page is the first level, and the rest is continued in the same way until the page that the user wants to view. Certainly, it is understandable that the number of levels of the page corresponds to the number of levels of the DOM tree or the number of execution levels of the codes. It is understandable that the DOM tree is the page content that can be viewed by the user and that each DOM tree is associated with the page viewed by the user. After a widget runs, the page displayed to the user may include much information, such as links for generating new pages, icon information, data information, and the number of levels of the page.

The recording unit 32 is configured to record the page information. The page information includes links for generating new pages, icon information, data information, and the number of levels of the page. In this embodiment, the recording unit 32 is configured to record the generated data of the DOM tree, including codes and execution levels of these codes.

In this embodiment, the run simulating unit 30 is further configured to simulate the events again when the page information recorded by the recording unit 32 has links for generating new pages or the recorded data of the DOM tree has codes for generating a new DOM tree and when the number of levels of the current page is smaller than the preset threshold or the number of execution levels of the codes for generating a new DOM tree is smaller than the preset threshold.

The summary information generating unit 36 is configured to: obtain the important information on the page when the page information recorded by the recording unit 32 does not have links for generating new pages or the recorded data of the DOM tree does not have codes for generating a new DOM tree or when the number of levels of the current page is smaller than the preset threshold or the number of execution levels of the codes for generating a new DOM tree is not smaller than the preset threshold, and obtain the codes for generating the important information.

The codes for generating the important information may include direct codes and indirect codes for generating the important information. The direct codes may include a code for obtaining the information from the server and a code for generating the local information of the client. The indirect codes may include codes based on which the important information is generated. It is understandable that the direct codes are generated by using the indirect codes. That is, the direct codes may be generated by using the previously executed codes, which may be known as the codes in the code path for generating the important information. Certainly, the codes required for generating the important information are the codes associated with the important information.

In this embodiment, the codes for generating the local information of the client and the codes for obtaining the information from the server may be the codes that can be executed without interactions with the user. Some codes that can be implemented only when the user enters parameters may be included in the codes for generating the important information depending on the previously executed codes, while the codes that can be implemented only through interactions with the user are removed.

In this embodiment, the summary information generating unit 36 is further configured to generate a summary information file according to the codes of the important information.

In another embodiment of the present invention, a determining unit 34 may be added based on FIG. 3A, as shown in FIG. 3B. It is understandable that the embodiment corresponding to FIG. 3A achieves the same technical effect as the embodiment corresponding to FIG. 3B. In this embodiment, the same executing units are not further described.

The determining unit 34 is configured to determine whether the page has links for generating new pages. In this embodiment, the determining unit 34 may also be configured to determine whether the DOM tree includes codes for generating a new DOM tree. In this embodiment, the determining unit 34 is further configured to determine whether the number of levels of the current page is smaller than the preset threshold or whether the number of execution levels of the codes for generating the new DOM tree is smaller than the preset threshold.

In this embodiment, the determining unit 34 involves the following two cases:
Case 1: The determining unit 34 is configured to determine whether the number of levels of the current page is smaller than the preset threshold or whether the number of execution levels of the codes for generating a new DOM tree is smaller than the preset threshold when determining that there are links for generating new pages or codes for generating a new DOM tree.
Case 2: The determining unit 34 is configured to determine whether the page has links for generating new pages when determining that the number of levels of the current page is smaller than the preset threshold or when the number of execution levels of the codes for generating a DOM tree is smaller than the preset threshold.

The run simulating unit 30 is configured to simulate events when the determining unit 34 determines that there are links for generating new pages or codes for generating a new DOM tree and that the number of levels of the current page is smaller than the preset threshold or that the number of execution levels of the codes for generating a new DOM tree is smaller than the preset threshold.

The summary information generating unit 36 is configured to: when the determining unit 34 determines that there are no links for generating new pages or codes for generating a new DOM tree or that the number of levels of the current page is smaller than the preset threshold or that the number of execution levels of the codes for generating a new DOM tree is not smaller than the preset threshold, obtain the important information on the page, and obtain the codes for generating the important information. The codes for generating the important information may include direct codes and indirect codes for generating the important information. The direct codes may include a code for obtaining the information from the server and a code for generating the local information of the client. The indirect codes may include codes based on which the important information is generated. It is understandable that the direct codes are generated by using the indirect codes. That is, the direct codes may be generated by using the previously executed codes, which may be known as the codes in the code path for generating the important information. Certainly, the codes required for generating the important information are the codes associated with the important information.

In this embodiment, the codes for generating the local information of the client and the codes for obtaining the information from the server may be the codes that can be executed without interactions with the user. Some codes that can be implemented only when the user enters parameters may be included in the codes for generating the important information depending on the previously executed codes, while the codes that can be implemented only through interactions with the user are removed.

In this embodiment, the summary information generating unit 36 is further configured to generate a summary information file according to the codes of the important information.

In the apparatus for generating a widget summary information file in this embodiment, the running of the details page of the widget is simulated to obtain related important information and codes associated with the important information, and by using these codes, widget summary information files are generated. These widget summary information files are generated without interactions between the widget and the user, and are directly obtained from the server through the codes, thus reducing the number of interactions between the user and the widget.

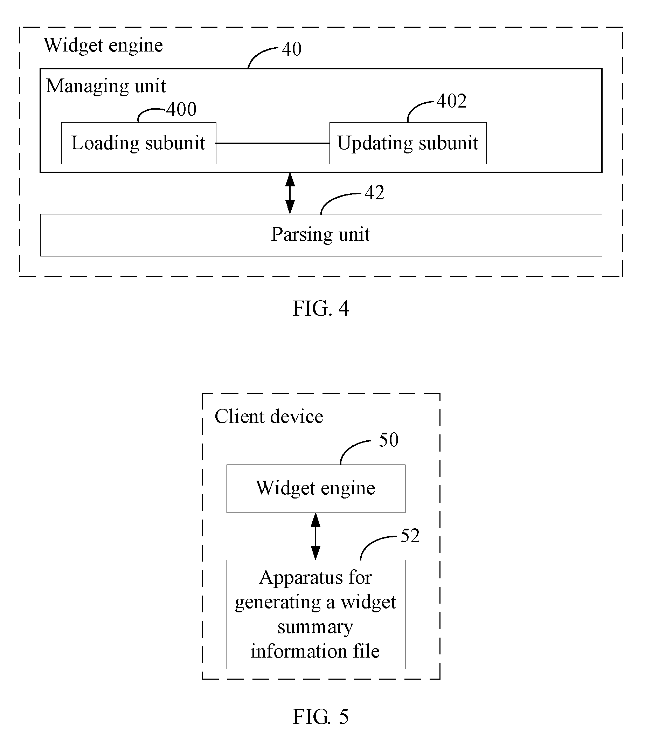

FIG. 4 shows an architecture diagram of a widget engine in an embodiment of the present invention.

In this embodiment, when the apparatus for generating a widget summary information file is an independent device, it may encapsulate the generated widget summary information file and the original widget into a file, and upload the file to the server for downloading by the user. After the user downloads the file, the user installs and runs the widget. When the user runs the widget, the user can obtain the widget summary information file directly and run the widget summary information file. In this embodiment, each widget corresponds to a widget summary information file. Thus, each widget corresponds to a widget icon. In the prior art, each widget runs and updates its corresponding widget icon. In this embodiment, however, the widget icons are uniformly updated by the widget engine. The widget engine uniformly invokes or obtains each widget summary information file, and generates a corresponding widget by using the widget summary information file. In this embodiment, the widget engine and the widget summary information file are stored in the client.

In this embodiment, the widget engine includes a managing unit 40 and a parsing unit 42. The managing unit 40 includes a loading subunit 400 and an updating subunit 402.

The managing unit 40 is configured to: obtain a widget summary information file, and generate a widget icon by using the widget summary information file.

When the widget engine runs, the loading subunit 400 is configured to obtain a widget summary information file on a timed basis. In this embodiment, the loading subunit 400 needs to re-obtain a widget summary information file periodically. In this embodiment, the loading subunit 400 needs to determine whether the period for re-obtaining a widget summary information file ends. If the period for re-obtaining a widget summary information file ends, the loading subunit 400 obtains the widget summary information file. Certainly, it is understandable that when the period for re-obtaining a widget summary information file ends, the loading subunit 400 may invoke the widget summary information file.

The loading subunit 400 is further configured to notify the parsing module 42 of parsing the widget summary information file obtained by the loading subunit 400 or configured to invoke the parsing module 42 to parse the widget summary information file obtained by the loading subunit 400. The parsing unit 42 is configured to: parse the widget summary information file to obtain codes in the widget summary information file, obtain information corresponding to the codes from the server according to the codes in the widget summary information file, and convert the format of the summary information file into a DOM tree format. In this embodiment, the codes associated with the important information in the widget summary information file are executed to obtain the important information from the server. In this embodiment, the executing subunit 402 generates a DOM tree by using the widget summary information file through the parsing unit 42. In this embodiment, the parsing unit 42 may also be known as a core engine in the widget. In this embodiment, the parsing unit 42 may use resources to parse and execute the widget summary information file. After these operations are completed, the parsing unit 42 stops operations. Therefore, releasing the resources.

In this embodiment, the generated DOM tree may be stored in the execution subunit 402, the parsing unit 42, or a storing unit.

The loading subunit 400 is further configured to notify the updating subunit 402 of rendering the DOM tree or configured to invoke the updating subunit 42 to render the DOM tree after the parsing unit 42 executes the parsed widget summary information file, that is, after the parsing unit 42 generates a DOM tree.

The updating subunit 402 is configured to: render the DOM tree, and generate a widget icon. In this embodiment, the rendering technology in the prior art may be configured to render the DOM tree into a page, and convert the page into an icon. In this embodiment, the updating subunit 402 is further configured to display the icon on the management interface according to the interface layout algorithm.

In this embodiment, a terminal installed with the widget engine may also invoke the widget summary information file from the storage medium.

In the apparatus for generating a widget icon in this embodiment of the present invention, a generated widget summary information file is obtained; the widget summary information file is executed to generate a widget icon. After the widget summary information file is invoked and executed, some threads may be invoked to obtain information from the server; after the operation for obtaining information from the server is completed, these threads are released. Because the widget summary information file generated in this embodiment does not include codes for interactions with the user, these threads may not be invoked to execute these codes and may not be reserved to execute interactions with the user. Thus, the thread resources of the system are not occupied. In addition, the widget icon is generated by using the widget summary information file, and the codes for interactions with the user are removed in the process of generating a widget summary information file. Thus, the process of generating a widget icon is optimized.

In addition, the generation of each widget icon is uniformly performed by the widget engine. That is, the generation of all the widget icons may be uniformly managed by using few threads. Compared with the prior art in which each widget runs its own widget icon and needs to occupy some threads, this embodiment not only reduces the number of occupied threads but also improves the efficiency in generating the icons.

FIG. 5 shows an architecture diagram of a client device in an embodiment of the present invention.

If the apparatus for generating a widget summary information file is configured in the client, it is understandable that the apparatus for generating a widget summary information file is configured in the terminal with the widget. In this embodiment, the widget terminal includes a widget engine 50 and an apparatus 52 for generating a widget summary information file. The widget engine 50 includes the managing unit and parsing unit shown in FIG. 4, and is not further described.

It is understandable to those skilled in the art that all or part of the processes of the method in the preceding embodiments of the present invention may be completed by hardware instructed by a computer program. The program may be stored in a computer readable storage medium, and may include processes of the preceding method during execution. The storage medium may be a magnetic disk, a compact disk, CD, a read-only memory (ROM), or a random access memory, RAM.

Although the present invention has been described through several exemplary embodiments, the invention is not limited to such embodiments. It is apparent that those skilled in the art can make various modifications and variations to the invention. The invention is intended to cover the modifications and variations provided that they fall in the scope of protection defined by the following claims or their equivalents.

## Claims

1. A method for generating a widget icon, comprising:
obtaining a widget summary information file;
parsing the widget summary information file, and executing the parsed widget summary information file; and
generating a widget icon according to the executed widget summary information file.

2. The method of claim 1, further comprising:
determining whether a refresh period ends; and
when the refresh period ends, invoking the widget summary information file.

3. The method of claim 1, wherein the process of parsing the widget summary information file and executing the parsed widget summary information file comprises:
parsing the widget summary information file to obtain codes in the widget summary information file;
obtaining information from a server and generating local information of a client according to the codes; and
converting a format of the widget summary information file that comprises the information obtained from the server and the local information of the client into a document object model, DOM, tree format.

4. The method of claim 1, further comprising:
generating a widget summary information file, the process of generating a widget summary information file comprising:
simulating running of a widget to generate a document object model, DOM, tree;
obtaining codes of important information in the DOM tree, wherein the codes of the important information comprise codes for generating local information of a client and codes for obtaining information from a server; and
generating the widget summary information file by using the codes.

5. The method of claim 4, further comprising:
when the DOM tree has codes for generating a new DOM tree and the number of execution levels of the codes in the DOM tree is smaller than a preset threshold,
simulating triggering of an event; and
simulating running of the widget to generate another DOM tree.

6. The method of claim 4, further comprising:
when the DOM tree has no codes for generating a new DOM tree or the number of execution levels of the codes in the DOM tree is not smaller than a preset threshold,
obtaining codes of the important information in the DOM tree to generate the widget summary information file.

7. The method of claim 6, wherein the process of obtaining the codes of the important information in the DOM tree to generate the widget summary information file comprises:
obtaining the important information of the DOM tree, wherein the important information comprises local information of the client and information obtained from the server; and
obtaining codes for generating the important information.

8. A widget engine for generating a widget icon, comprising a managing unit and a parsing unit, wherein:
the managing unit further comprises:
a loading subunit, configured to: obtain a widget summary information file, and
invoke the parsing unit to parse the widget summary information file and execute the parsed widget summary information file; and
an updating subunit, configured to generate a widget icon according to the executed widget summary information file.

9. The widget engine of claim 8, wherein the loading subunit is further configured to obtain the widget summary information file when a period ends.

10. The widget engine of claim 8, wherein the parsing unit is configured to: parse the widget summary information file to obtain codes in the widget summary information file, obtain information from a server and generate local information of a client according to the codes, and convert a format of the widget summary information file that comprises the information obtained from the server and the local information of the client into a document object model, DOM, tree format.

11. A client device, comprising:
a widget engine according to any one of claims 8-10; and
an apparatus for generating a widget summary information file, configured to: simulate running of a widget to generate a document object model (DOM) tree, and
obtain codes of important information in the DOM tree to generate the widget summary information file when the DOM tree has no codes for generating a new DOM tree or the number of execution levels of the codes in the DOM tree is not smaller than a preset threshold.

12. The client device of claim 11, the apparatus for generating a widget summary information file comprising:
a run simulating unit, configured to simulate running of a widget to generate a document object model, DOM, tree; and
a summary information generating unit, configured to: obtain codes of important information in the DOM tree, wherein the codes of the important information comprise codes for generating local information of a client and codes for obtaining information from a server, and generate the widget summary information file by using the codes.

13. The client device of claim 12, the apparatus for generating a widget summary information file further comprising a determining unit, configured to determine whether the DOM tree has codes for generating a new DOM tree or whether the number of execution levels of the codes in the DOM tree is smaller than a preset threshold; or
a recording unit, configured to record the generated data of the DOM tree, wherein the data comprises codes for generating the DOM tree and execution levels of the codes.

14. The client device of claim 13, wherein the summary information generating unit is further configured to: when determining that the DOM tree has no codes for generating a new DOM tree or determining that the number of execution levels of codes in the DOM tree is not smaller than the preset threshold, obtain the codes of the important information in the DOM tree to generate the widget summary information file; or
the run simulating unit is further configured to simulate triggering of an event when determining that the DOM tree has codes for generating a new DOM tree and that the number of execution levels of the codes in the DOM tree is smaller than the preset threshold.

15. The client device of claim 12, wherein the summary information generating unit is further configured to obtain the important information in the DOM tree, wherein the important information comprises the local information of the client and the information obtained from the server.

## Amended claims

### Amended claims in accordance with Rule 137(2) EPC.

**1.** A method for generating a widget icon, comprising:
obtaining a widget summary information file;
parsing the widget summary information file, and executing the parsed widget summary information file; and
generating a widget icon according to the executed widget summary information file;
wherein the process of parsing the widget summary information file and executing the parsed widget summary information file comprises:
parsing the widget summary information file to obtain codes in the widget summary information file;
obtaining information from a server and generating local information of a client according to the codes; and
converting a format of the widget summary information file that comprises the information obtained from the server and the local information of the client into a document object model, DOM, tree format;
wherein the process of generating a widget icon according to the executed widget summary information file comprises:
rendering the DOM tree to generate a page, and converting the page into an icon.

**2.** The method of claim 1, further comprising:
determining whether a refresh period ends; and
when the refresh period ends, the process of obtaining a widget summary information file is executed.

**3.** The method of claim 1, further comprising:
generating a widget summary information file, the process of generating a widget summary information file comprising:
simulating running of a widget to generate a document object model, DOM, tree;
obtaining codes of important information in the DOM tree, wherein the important information comprises local information of a client and information obtained from a server; wherein the codes of the important information comprise codes for generating local information of a client and codes for obtaining information from a server; and
generating the widget summary information file according to the codes of the important information.

**4.** The method of claim 3, further comprising:
when the DOM tree has codes for generating a new DOM tree and the number of execution levels of the codes in the DOM tree is smaller than a preset threshold,
simulating triggering of an event; and
simulating running of the widget to generate another DOM tree.

**5.** The method of claim 3, further comprising:
when the DOM tree has no codes for generating a new DOM tree or the number of execution levels of the codes in the DOM tree is not smaller than a preset threshold,
obtaining codes of the important information in the DOM tree to generate the widget summary information file.

**6.** The method of claim 5, wherein the process of obtaining the codes of the important information in the DOM tree to generate the widget summary information file comprises:
obtaining the important information of the DOM tree; and
obtaining codes for generating the important information.

**7.** A widget engine for generating a widget icon, comprising a managing unit and a parsing unit, wherein:
the managing unit further comprises:
a loading subunit, configured to: obtain a widget summary information file, and
invoke the parsing unit to parse the widget summary information file and execute the parsed widget summary information file; and
an updating subunit, configured to generate a widget icon according to the executed widget summary information file;
wherein the parsing unit is configured to: parse the widget summary information file to obtain codes in the widget summary information file, obtain information from a server and generate local information of a client according to the codes, and convert a format of the widget summary information file that comprises the information obtained from the server and the local information of the client into a document object model, DOM, tree format; and
the updating subunit is configured to render the DOM tree into a page, and convert the page into an icon.

**8.** The widget engine of claim 7, wherein the loading subunit is further configured to obtain the widget summary information file when a period ends.

**9.** A client device, comprising:
a widget engine according to any one of claims 8-10; and
an apparatus for generating a widget summary information file, configured to:
simulate running of a widget to generate a document object model (DOM) tree, and obtain codes of important information in the DOM tree to generate the widget summary information file when the DOM tree has no codes for generating a new DOM tree or the number of execution levels of the codes in the DOM tree is not smaller than a preset threshold, wherein the important information comprises the local information of a client and the information obtained from a server.

**10.** The client device of claim 9, the apparatus for generating a widget summary information file comprising:
a run simulating unit, configured to simulate running of a widget to generate a document object model, DOM, tree; and
a summary information generating unit, configured to: obtain codes of important information in the DOM tree, wherein the codes of the important information comprise codes for generating local information of a client and codes for obtaining information from a server, and generate the widget summary information file by using the codes.

**11.** The client device of claim 10, the apparatus for generating a widget summary information file further comprising a determining unit, configured to determine whether the DOM tree has codes for generating a new DOM tree or whether the number of execution levels of the codes in the DOM tree is smaller than a preset threshold; or a recording unit, configured to record the generated data of the DOM tree, wherein the data comprises codes for generating the DOM tree and execution levels of the codes.

**12.** The client device of claim 11, wherein the summary information generating unit is further configured to: when determining that the DOM tree has no codes for generating a new DOM tree or determining that the number of execution levels of codes in the DOM tree is not smaller than the preset threshold, obtain the codes of the important information in the DOM tree to generate the widget summary information file; or
the run simulating unit is further configured to simulate triggering of an event when determining that the DOM tree has codes for generating a new DOM tree and that the number of execution levels of the codes in the DOM tree is smaller than the preset threshold.

**13.** The client device of claim 10, wherein the summary information generating unit is further configured to obtain the important information in the DOM tree.
